# EUROPEAN PATENT APPLICATION

(11) **EP 4 592 127 A1**
(43) Date of publication of application: **30.07.2025**
(21) Application number: 25153284.2
(22) Date of filing: 22.01.2025
(51) Int. Cl.: B60L 1/00, B60L 1/02, B60L 3/00, B60L 3/12, B60L 15/20, B61L 15/00, B61L 25/02, B61L 27/04, B61L 27/16, G06N 20/00

(54) **SYSTEM FOR MINIMIZING THE ENERGY CONSUMPTION OF A RAIL VEHICLE**

(30) Priority: 24.01.2024 IT 202400001320
(71) Applicant: HITACHI RAIL STS S.P.A., 80147 Napoli (IT); Hitachi Rail Limited, London EC4M 7AW (GB)
(72) Inventor: FRATELLI, Luigi, 80147 NAPOLI (IT); FASANO, Francesco, 80147 NAPOLI (IT); SACCHI, Marco, 80147 NAPOLI (IT); GRABER, Giuseppe, 80147 NAPOLI (IT); D'ANDRIA, Gaetano, 80147 NAPOLI (IT); AUSIELLO, Walter, 80147 NAPOLI (IT); GUNAWARDANA, Dimantha, LONDON, EC4M 7AW (GB); CORASOLLA, Bruno, LONDON, EC4M 7AW (GB)
(74) Representative: Studio Torta S.p.A.

(57) **Abstract**

A rail vehicle (10) including a plurality of components (14) and an optimization system (20) coupled to the components (14) and configured to receive input data and, based on the received input data, generate a plurality of candidate speed profiles and select, among the candidate speed profiles, an optimized speed profile for driving the rail vehicle (10), the optimized speed profile minimizing the energy consumption of the rail vehicle (10). The input data comprise: kinematics data (D1) determined in real-time and indicative of real-time kinematics information of the rail vehicle (10); track data (D2) indicative of a path to be travelled by the rail vehicle (10); constraint data (D4) indicative of constraints for the functioning of the rail vehicle (10); and component condition data (D3) comprising operating parameters determined in real-time and indicative of the real-time functioning of the components (14).

## Description

### CROSS-REFERENCE TO RELATED APPLICATIONS

This patent application claims priority from Italian patent application no. 102024000001320 filed on January 24, 2024, the entire disclosure of which is incorporated herein by reference.

### TECHNICAL FIELD

The present invention relates to a system for minimizing the energy consumption of a rail vehicle. In details, it relates to a rail vehicle with an improved optimization system that allows to minimize the energy consumption of the rail vehicle, to the improved optimization system and to a related method for minimizing the energy consumption of the rail vehicle.

### BACKGROUND OF THE INVENTION

As known, energy consumption is a crucial issue in several applications and, in particular, in vehicle management.

For example, the need to reduce the energy consumption in vehicles such as rail vehicles (e.g., trains) is often felt, due to the large amount of energy required to drive these heavy vehicles.

Known solutions generally aim at replacing previous components of the rail vehicle with new components having lower energy consumption requirements. However, this solution requires high amounts of research and costs to develop or acquire the replacement components and it can only provide small reductions of energy consumption, which do not significantly impact on the overall energy consumption of the rail vehicle.

Therefore, the need is felt to overcome the above-mentioned issues.

### SUMMARY OF THE INVENTION

The aim of the present invention is to provide a rail vehicle with an improved optimization system, an improved optimization system and a related method for minimizing the energy consumption of the rail vehicle, that overcome the issues mentioned above.

According to the present invention, a rail vehicle with an improved optimization system, an improved optimization system and a related method for minimizing the energy consumption of the rail vehicle are provided, as defined in the annexed claims.

### BRIEF DESCRIPTION OF DRAWINGS

For a better understanding of the present invention, preferred embodiments thereof are now described, purely by way of non-limiting example and with reference to the attached drawings, wherein:
- Figure 1 is a block diagram schematically showing a rail vehicle comprising an optimization system, according to an embodiment of the present invention;
- Figure 2 shows tables representing input data of the optimization system of Figure 1, according to an embodiment of the present invention;
- Figure 3 is a block diagram schematically showing details of the optimization system, according to an embodiment of the present invention;
- Figure 4 is a block diagram schematically showing training details of a module of the optimization system, according to an embodiment of the present invention; and
- Figure 5 is a table showing examples of data generated by the optimization system of Figure 1.

In the following, elements common to the different embodiments have been indicated with the same reference numbers.

### DETAILED DESCRIPTION OF THE INVENTION

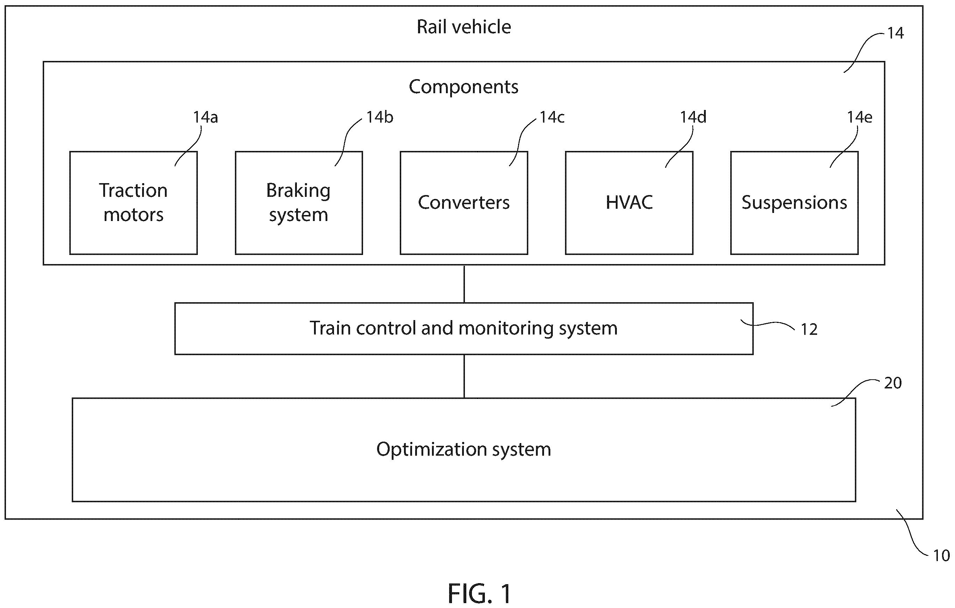

Figure 1 shows a rail vehicle 10, such as a train, comprising an optimization system 20 configured to minimize the energy consumption of the rail vehicle 10, as better discussed in the following.

The rail vehicle 10 also comprises a plurality of known components 14. The components 14 comprise sub-systems of the rail vehicle 10 which are operable during the functioning of the rail vehicle 10 and which are powered in order to function (i.e., which contribute to the energy consumption of the rail vehicle 10). Non-limiting examples of the components 14 are traction motors 14a (in details, electrical motors for rail vehicles), braking system 14b (in particular, compressors of the braking system 14b), converters 14c (i.e., traction converters for converting the power supplied by a power supply, external to the rail vehicle 10 and not shown, into a format usable by the rail vehicle 10, e.g. from AC to DC), "Heating, Ventilation and Air Conditioning" (HVAC) 14d of the rail vehicle 10. However, other sub-systems of the rail vehicle 10 can be analogously considered in addition or substitution to the previously mentioned ones, as per se evident.

The components 14 can also comprise additional sub-systems of the rail vehicle 10 which are used during the functioning of the rail vehicle 10 and which influence in some way the energy consumption of the rail vehicle 10. A non-limiting example can be the suspensions 14e of the rail vehicle 10. However, other sub-systems of the rail vehicle 10 can be analogously considered, as per se evident.

As shown in Figure 1, the rail vehicle 10 also comprises a train control and monitoring system (TCMS) 12 of per se known type, operatively coupled to the optimization system 20 and to the components 14, as well as to sensors of the rail vehicle 10 (not shown in Figure 1).

The TCMS 12 is configured to interface the optimization system 20 with the sensors and the components 14, in a per se known way.

Moreover, the TCMS 12 is configured to control the components 14 based on outputs of the optimization system 20, as better discussed in the following.

In fact, as better described in the following, the optimization system 20 generates in use an optimized speed profile of the rail vehicle 10. When controlled by means of the TCMS 12 based on the optimized speed profile, the energy consumption of the rail vehicle 10 is reduced.

Moreover, in use the optimization system 20 can also generate an optimized configuration parameter set comprising a plurality of control parameters for controlling by means of the TCMS 12 the components 14 of the rail vehicle 10. When the components 14 of the rail vehicle 10 are controlled based on the optimized configuration parameter set, the energy consumption of the rail vehicle 10 is further reduced.

Moreover, the TCMS 12 is configured to acquire input data from the sensors and the components 14, indicative of conditions and information of the rail vehicle 10 (e.g., of the components 14) and, optionally, of the environment in which the rail vehicle 10 is present. The TCMS 12 is also configured to provide such input data to the optimization system 20, so that the optimization system 20 may generate the according optimized speed profile and, optionally, the optimized configuration parameter set.

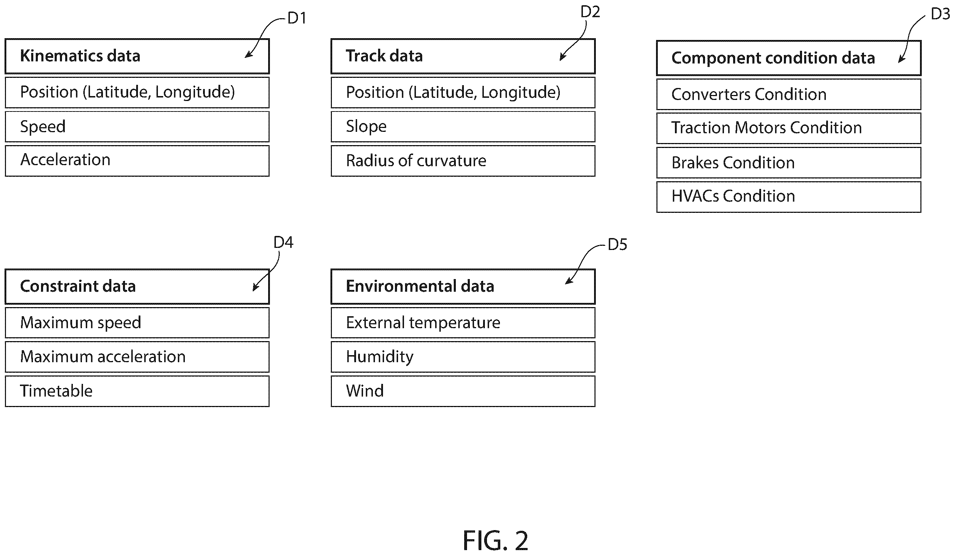

In details, the input data are schematically shown in Figure 2.

The input data comprise at least kinematics data D1 of the rail vehicle 10, track data D2 of the path of the rail vehicle 10, component condition data D3 of the components 14 and constraint data D4. The input data can also comprise environmental data D5.

The kinematics data D1 are indicative of kinematics information of the rail vehicle 10. The kinematics data D1 are acquired in real-time, i.e. they are acquired during the functioning of the rail vehicle 10 and represent at each time instant the current state of the rail vehicle 10. In particular, the kinematics data D1 can be acquired by the TCMS 12 (or, alternatively, by sensors coupled to the TCMS 12) .

In details, the kinematics data D1 can comprise at least: a position of the rail vehicle 10 at the current time instant at which the kinematics data are acquired (e.g., expressed in terms of latitude and longitude of the rail vehicle 10 at said current time instant); a speed of the rail vehicle 10 at said current time instant; and an acceleration of the rail vehicle 10 at said current time instant.

According to an exemplary and non-limiting embodiment (not shown), in order to acquire these kinematics data D1, the TCMS 12 can be coupled to: a Global Positioning System (GPS) configured to acquire the current position of the rail vehicle 10; an odometer configured to measure the speed of the rail vehicle 10; and an acceleration sensor configured to measure the acceleration of the rail vehicle 10. However, other known sensors or techniques can be analogously considered to acquire these quantities.

The track data D2 are indicative of information about the path that the rail vehicle 10 is travelling and/or is going to travel. In other words, they are indicative of the path that the rail vehicle 10 has to travel in its current activity (i.e., in the travel to be completed).

The track data D2 can comprise at least: a set of positions that the rail vehicle 10 assumes during the travel that it has to carry out (e.g., expressed in terms of a set of latitudes and longitudes of the rail vehicle 10, each couple of latitude and longitude information defining a corresponding position of the rail vehicle 10 along its travel path); a slope of the tracks at each position of the rail vehicle 10 along the travel path (i.e., indicative of the degree of vertical inclination of the tracks at each possible position of the rail vehicle 10); and a radius of curvature of the tracks at each position of the rail vehicle 10 along the travel path (i.e., indicative of the degree of lateral deflection of the tracks at each possible position of the rail vehicle 10). In other words, the set of positions of the track data D2 defines the path that the rail vehicle 10 has to travel.

In particular, the track data D2 are generally acquired at the beginning of each travel (e.g., downloaded from a server external to the rail vehicle 10 that, for example, stores the track data of all the paths that the rail vehicle 10 can travel) and stored in the rail vehicle 10 (e.g., in a data storage unit of the TCMS 12, such as a memory unit) so that they can be used when required during the travel of the rail vehicle 10.

According to an exemplary and non-limiting embodiment (not shown), in order to acquire these track data D2, the TCMS 12 comprises: a communication module operatively couplable with the external server in order to communicate with it; and the data storage unit coupled to the communication module so as to acquire the track data when required and to store them. However, other known techniques can be analogously considered in order to acquire these quantities.

The component condition data D3 are indicative of operative parameters of the components 14 of the rail vehicle 10, measured in real-time. In other words, the component condition data D3 are real-time measured quantities indicative of the real-time functioning of the components 14.

Concerning the traction motors 14a, the component condition data D3 can comprise: a status (e.g., stopped, pre-start, starting, warming up, on, cooling down, stopping, post run); an RPM (revolutions per minute) number; a usage meter indicative of the past operating time of the traction motors 14a (i.e., of their working life duration up to the considered time instant); an air intake temperature, for example measured at the motor air intake; an air intake pressure, for example measured at the motor air intake; and an intake air after-filter pressure, for example measured at the motor air intake.

Concerning the braking system 14b, the component condition data D3 can comprise: a status (e.g., active, inactive); hours of life indicative of the past operating time of the braking system 14b (i.e., of its working life duration up to the considered time instant); cycle counting indicative of the number of cycles performed within a specified period (e.g., within the past operating time of the braking system 14b); and pressure levels (e.g., of main pipe, general pipe, brake cylinder, valves).

Concerning the converters 14c, the component condition data D3 can comprise: a switching frequency (i.e., the switching frequency of the semiconductor devices present within the converters 14c); a converter temperature; an input/output voltage; input/output current; an error status (in details, the per se known error status that the converters 14c generate in case of their malfunctioning); and an input/output power of the converters 14c.

Concerning the HVAC 14d, the component condition data D3 can comprise: a status (e.g., on/off); an operating mode; a supply temperature indicative of the measured temperature of the air supplied to the wagon of the rail vehicle 10; and a target temperature indicative of the target temperature of the air to be supplied to the wagon of the rail vehicle 10.

Concerning the suspensions 14e, the component condition data D3 can comprise: a static bogie weight; and a body weight pressure (i.e., the suspension load in terms of pressure, which allows to calculate the weight of the carriage with the variable load). The component condition data D3 can be acquired by load sensors operatively coupled to the suspensions 14e and configured to measure the cited quantities.

These details provided for the component condition data D3 are exemplary and should not be considered as limitative. In other words, subsets and combinations of these examples can be used as component condition data D3, as well as other examples of information about the components 14.

In particular, the component condition data D3 are acquired in real-time through the TCMS 12. In further details, the TCMS 12 can be coupled to known sensors and/or acquisition devices for measuring the component condition data D3, in a per se known way. For example, the TCMS 12 can be coupled to pressure sensors for measuring the air intake pressure and the intake air after-filter pressure, temperature sensors for measuring the air intake temperature, current and voltage sensors for measuring the input/output voltage and the input/output current, etc. However, other known measurement techniques can be analogously considered in order to acquire these quantities.

The constraint data D4 are indicative of constraints for the functioning of the rail vehicle 10.

These constraints may be either mandatory constraints (i.e., the rail vehicle 10 necessarily has to function according to these constraints) or suggested and target goals (i.e., the rail vehicle 10 should function according to these constraints but it can depart from them in exceptional cases) .

The constraint data D4 can comprise one or more of the following: a maximum speed of the rail vehicle 10; a maximum acceleration of the rail vehicle 10; and a timetable scheduling the travel of the rail vehicle 10. In details, the maximum speed and the maximum acceleration correspond to the maximum values that the corresponding kinematics data D1 can assume (e.g., considering the structural and working features of the rail vehicle 10, the peculiar features of the path to be travelled, etc.) and can be considered as examples of the mandatory constraints. The maximum speed and the maximum acceleration can be either single values (i.e., considering the chosen rail vehicle 10 and the travel to be done, there is a single value of maximum speed and a single value of maximum acceleration) or vectors of instances, each instance corresponding to the maximum value of the speed/acceleration that can be reached at a corresponding position of the rail vehicle 10 along the path to be travelled.

In particular, the constraint data D4 are generally acquired at the beginning of each travel (e.g., downloaded from the server external to the rail vehicle 10) and stored in the rail vehicle 10 (e.g., in the data storage unit) so that they can be used when required during the travel of the rail vehicle 10.

According to an exemplary and non-limiting embodiment (not shown), in order to acquire these constraint data D4, the TCMS 12 comprises the communication module and the data storage unit, as previously discussed. However, other known techniques can be analogously considered in order to acquire these quantities.

The environmental data D5 are indicative of features of the environment, surrounding the rail vehicle 10, that may influence the working and thus the energy consumption of the rail vehicle 10.

The environmental data D5 can comprise one or more of the following: external temperature (i.e., temperature of the environment, measured outside the rail vehicle 10); humidity (i.e., humidity of the environment, measured outside the rail vehicle 10); and wind speed. In fact, these factors may influence the energy consumption of the rail vehicle 10. For example, a high humidity may decrease the grip between the railway wheels and the rails, thus affecting the acceleration and braking performances of the rail vehicle 10.

The environmental data D5 may be acquired in real time.

According to an exemplary and non-limiting embodiment (not shown), in order to acquire these environmental data D5 in real-time, the TCMS 12 can be coupled to known sensors (e.g., temperature, humidity and wind speed sensors of the rail vehicle 10). However, other known techniques can be analogously considered in order to acquire these quantities.

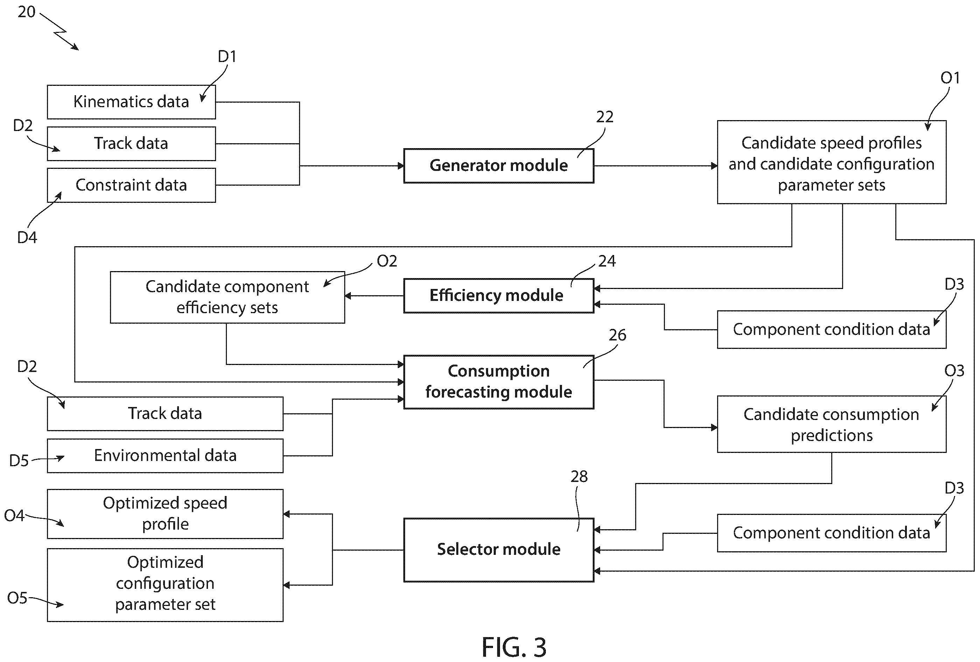

Figure 3 shows in details the optimization system 20.

In use, the optimization system 20 receives from the TCMS 12 the kinematics data D1 (in details, measured at the current time instant and thus indicative of measured initial conditions useful for the following data processing), the track data D2, the component condition data D3 (in details, measured at the current time instant and thus indicative of measured initial conditions useful for the following data processing) and the constraint data D4 and, based on this information, generates the optimized speed profile of the rail vehicle 10, which allows to reduce the energy consumption of the rail vehicle 10.

In addition to the optimized speed profile, the optimization system 20 can also generate the optimized configuration parameter set for controlling the components 14 of the rail vehicle 10.

In details, the optimization system 20 comprises a generator module 22 configured to receive the kinematics data D1, the track data D2 and the constraint data D4 and, based on these data, generate a plurality of candidate speed profiles and a respective plurality of candidate configuration parameter sets (also shown in Figure 3 the reference number O1).

As better discussed in the following, one of the candidate speed profiles will be the optimized speed profile outputted by the optimization system 20 and one of the candidate configuration parameter sets will be the optimized configuration parameter set outputted by the optimization system 20.

Each one of the candidate speed profiles is indicative of a profile of the motion of the rail vehicle 10 and comprises respective values at each time instant. In details, each candidate speed profile comprises, at each time instant of the travel, respective values of position, speed and, optionally, acceleration. In other words, each candidate speed profile comprises a series of predicted kinematics data, wherein each item of the series comprises the kinematics data predicted for a respective time instant.

Each one of the candidate speed profiles is associated to a respective candidate configuration parameter set. In details, each candidate configuration parameter set corresponds to the set of configuration parameters that is determined based on the respective candidate speed profile.

Each candidate configuration parameter set corresponds to the set of configuration parameters that are used to control the functioning of the components (e.g., electrical power supplied to one of the components 14, frequency of operation of another component 14, etc.).

In the following it is exemplarily considered that each candidate configuration parameter set corresponds to a set of configuration parameters that does not change in time (i.e., the same configuration parameters are used to control the components 14 throughout the whole travel of the rail vehicle 10). However, according to an alternative embodiment better described in the following, each candidate configuration parameter set may comprise a series of configuration parameter sets, in particular one configuration parameter set for each time instant of the travel, so that the configuration parameters may change in time to better adapt the control of the components 14 to the conditions of the travel.

For example and exemplarily considering the case of the traction motors 14a, one of the candidate configuration parameter set can be indicative of keeping active three out of four traction motors 14a while the remaining one is deactivated, whereas another candidate configuration parameter set can be indicative of maintaining active two out of four traction motors 14a while the remaining two are deactivated.

Moreover, the candidate configuration parameter set can also be indicative of the activity level that the components 14 should have (i.e., working percentage, calculated with respect to the maximum working capability of the component 14) and thus, in the considered example, one of the candidate configuration parameter set can be indicative of keeping three out of four traction motors 14a at 80% of working capability while the remaining one is deactivated, whereas another candidate configuration parameter set can be indicative of maintaining two out of four traction motors 14a at 95% of working capability while the remaining two are deactivated.

Each couple of candidate speed profile and respective candidate configuration parameter set defines a candidate solution that leads to a respective value of energy consumption, as detailed in the following.

The candidate speed profiles are different between each other, as well as the candidate configuration parameter sets, so that a plurality of different solutions can be evaluated by the optimization system 20.

The number of the candidate speed profiles and of the candidate configuration parameter sets can be predetermined and can be chosen when designing the optimization system 20 according to a trade-off between accuracy in finding the solution which reduces the most the energy consumption of the rail vehicle 10 and computational time and resources required to arrive at the optimized solution.

According to an exemplary and non-limiting embodiment, the generator module 22 is based on a per se known physical model of the rail vehicle 20, i.e. comprises a mathematical representation of the rail vehicle 20. Therefore, according to per se known techniques, the generator module 22 is able to generate the abovementioned outputs based on the abovementioned inputs.

The optimization system 20 further comprises an efficiency module 24 configured to receive the component condition data D3, the candidate speed profiles and the candidate configuration parameter sets and to generate, based on these inputs, a plurality of candidate component efficiency sets (in details, one set for each candidate speed profile and candidate configuration parameter set). In Figure 3, the candidate component efficiency sets are also shown with the reference number O2.

The candidate component efficiency sets are indicative of the efficiencies of the components 14 when the rail vehicle 10 is controlled according to the respective candidate speed profile and candidate configuration parameter set. In other words, each candidate component efficiency set comprise one instance for the efficiency of each one of the components 14.

In the following it is exemplarily considered that each candidate component efficiency set corresponds to a set of efficiency parameters that does not change in time (i.e., the same configuration parameters are applicable to the components 14 throughout the whole travel of the rail vehicle 10). However, according to an alternative embodiment better described in the following, each candidate component efficiency set may comprise a series of efficiency parameter sets, in particular one set for each time instant of the travel, so that the efficiency parameters may change in time to better reflect the changes of the components 14 in time due to the conditions of the travel.

For example, the efficiencies can be expressed in normalized values, e.g. 0.7, 0.98, etc.

According to an exemplary and non-limiting embodiment, the efficiency module 24 is based on a per se known physical models of the components 14, i.e. comprises mathematical representations of the components 14. In particular, the efficiency module 24 comprises physical models of the traction motors 14a, the braking system 14b, the converters 14c, the HVAC 14d and the suspensions 14e (in particular, the physical model of the suspensions 14e is preferable but optional since it is not actually used to calculate the efficiency of the suspensions 14e, but rather it is used to estimate the variable weight of the rail vehicle 10, due to the unknown number of passengers). Therefore, according to per se known techniques, the efficiency module 24 is able to generate the abovementioned outputs based on the abovementioned inputs and in particular based on the component condition data D3.

Due to the fact that the candidate component efficiency sets are generated based on the component condition data D3, they are determined based on the real-time measured conditions of the components 14.

The optimization system 20 further comprises a consumption forecasting module 26 configured to receive the candidate component efficiency sets, the candidate speed profiles, the candidate configuration parameter sets, the track data D2 and, optionally, the environmental data D5 and, based on these inputs, generate a plurality of candidate consumption predictions (in details, one for each candidate speed profile and thus one for each candidate solution). In Figure 3, the candidate consumption predictions are shown with the reference number O3.

Each candidate consumption prediction is indicative of a predicted energy consumption of the rail vehicle 10 (or, more in details, of each component 14 of the rail vehicle 10) when the rail vehicle 10 is controlled based on the respective candidate speed profile and the respective candidate configuration parameter set. In the first case, the candidate consumption prediction is a single value indicative of the overall energy consumption predicted for the rail vehicle 10, whereas in the second case the candidate consumption prediction is a set defined by a vector comprising one instance for each component 14, that is indicative of the energy consumption predicted for the respective component 14 of the rail vehicle 10.

According to an exemplary and non-limiting embodiment, the consumption forecasting module 26 is implemented according to artificial intelligence or machine learning techniques, in particular through a neural network such as a convolutional neural network (CNN) or a recurrent neural network (RNN).

The training of the consumption forecasting module 26 is better described in the following.

The optimization system 20 further comprises a selector module 28 configured to receive the candidate speed profiles, the candidate configuration parameter sets, the candidate consumption predictions and, optionally, the component condition data D3 and, based on the candidate consumption predictions and optionally the component condition data D3, output the optimized speed profile and the optimized configuration parameter set by selecting one among the candidate speed profiles and the corresponding candidate configuration parameter set. In Figure 3, the optimized speed profile and the optimized configuration parameter set are respectively shown with the reference numbers O4 and O5.

In details, the optimized speed profile and the optimized configuration parameter set correspond to the solution, among the available candidate solutions, that leads to the minimization of the energy consumption of the rail vehicle 10.

With the wording "minimization" of the energy consumption, it should be intended that the present description is not limited to the single candidate solution leading to the highest reduction of the energy consumption of the rail vehicle 10. On the other hand, more than one candidate solutions can be considered as minimizing the energy consumption of the rail vehicle 10, for example if they lead each one to a respective overall energy consumption which is close to the one of the single candidate solution having the highest reduction of the energy consumption of the rail vehicle 10 (e.g., if a difference between their energy consumption and the lowest energy consumption available is within a predefined threshold, for example is within 50 of the lowest energy consumption). Therefore, both the cases wherein the minimization of the energy consumption is achieved by a single candidate solution leading to the highest reduction of the energy consumption and wherein the minimization of the energy consumption is achieved by one or more candidate solution which are not the single candidate solution leading to the highest reduction of the energy consumption but which lead to values of the energy consumption that are close to the one of the highest reduction of the energy consumption, can be analogously considered in the present description.

In particular, if the candidate consumption predictions are indicative of an overall predicted energy consumption of the rail vehicle 10, the optimized solution can be chosen as the candidate solution associated to the lowest candidate consumption prediction (or close to the lowest candidate consumption prediction, as previously described).

On the other hand, if the candidate consumption predictions are indicative each one of predicted energy consumptions of all the components 14 of the rail vehicle 10, the optimized solution can be chosen as the candidate solution associated to a minimization of the overall predicted energy consumption of the rail vehicle 10 (e.g., calculated as a sum of the predicted energy consumptions of the components 14) or according to other criteria (e.g., the lowest overall energy consumption of the rail vehicle 10, calculated by taking into account the predicted energy consumptions of the components 14 that are selected, among the available possibilities, and controlled based on the component condition data D3). In the last case for example, the component condition data D3 may be indicative of malfunctioning or low efficiencies of some redundant component (e.g., of the fact that three out of four traction motors 14a should be active whereas one out of three should be deactivated, in the previously considered example) and the candidate consumption prediction for the components 14 may be indicative of which components would lead to the highest energy wastes (e.g., the third traction motor 14a is the one among the four traction motors 14a which has the highest predicted energy consumption), so that the combination of these information leads to the decision about which of the redundant components 14a may be deactivated (or in general controlled according to special criteria) in order to minimize the energy consumption of the rail vehicle 10 (e.g., the third traction motor 14a should be deactivated, or its working should be reduced below a working capability threshold). To achieve this goal, it is also possible to use the candidate component efficiency sets instead of the component condition data D3.

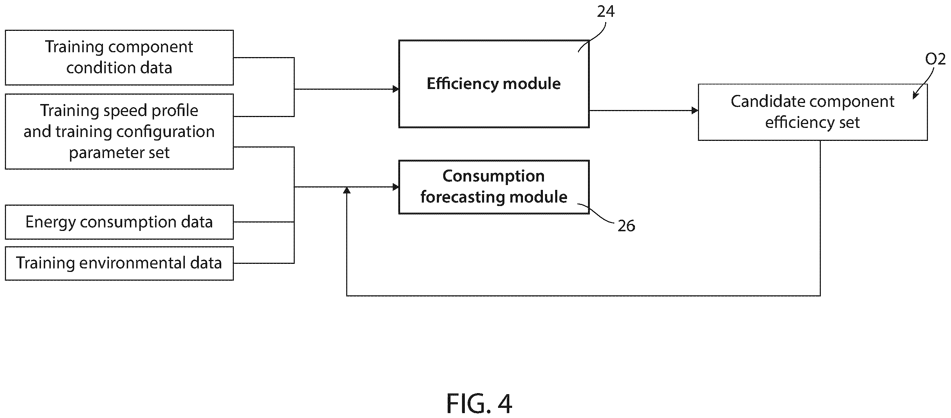

Figure 4 shows details about the training of the consumption forecasting module 26.

In particular, before being used in real-time computation, the consumption forecasting module 26 is trained in order to be able to generate the candidate consumption predictions.

In details, the training can be performed iteratively and in a supervised manner, by using different inputs at each training iteration.

During each training iteration, the efficiency module 24 is used to generate a respective candidate component efficiency set, that is then sent to the consumption forecasting module 26 for its training. Therefore, the efficiency module 24 is not trained in itself but it is used to generate one of the inputs required for the training of the consumption forecasting module 26.

In details, at each training iteration the efficiency module 24 receives the following training data: training component condition data (analogous to the component condition data D3, but measured from past travels of the rail vehicle 10 and here used for training purposes), a respective training speed profile and a respective training configuration parameter set (respectively analogous to the candidate speed profile and the candidate configuration parameter set, but measured from past travels of the rail vehicle 10 and here used for training purposes).

Based on these input data, the efficiency module 24 generates a corresponding candidate component efficiency set that is sent to the consumption forecasting module 26.

At each training iteration, the consumption forecasting module 26 receives the following training data: the respective training speed profile also sent to the efficiency module 24, the respective training configuration parameter set also sent to the efficiency module 24, the candidate component efficiency set generated by the efficiency module 24, energy consumption data and, optionally, training environmental data (analogous to the environmental data D5, but measured from past travels of the rail vehicle 10 and here used for training purposes).

In details, the training speed profile, the training configuration parameter, the training component condition data and the training environmental data acquired at each training iteration are measured data that refer to a same past travel of the rail vehicle 10 (or, analogously, to another rail vehicle of the same fleet).

In details, the energy consumption data comprise a database of measured energy consumption parameters, acquired during past travels of the rail vehicle 10 (as well as, optionally, also based on travels of other rail vehicles, for example of the same type of the considered rail vehicle 10). Therefore, the energy consumption data are indicative of historical data about the energy consumption of the rail vehicle 10.

In further details, the energy consumption data are defined by the energy meter at a pantograph of the rail vehicle 10 and thus are defined from an overall point of view of the rail vehicle 10 (i.e., are not specifically associated to one or more of the components 14 but depend on the overall energy consumption of the rail vehicle 10). For example, they are acquired by the pantograph energy meter equipped with transducers (current and voltage transducers), which acquire these data and communicate them to the TCMS 12.

The energy consumption data can comprise one or more of the following: line voltage supplied by the power supply to the rail vehicle 10; line current supplied by the power supply to the rail vehicle 10; energy absorbed by the rail vehicle 10 during its functioning; and energy regenerated by the rail vehicle 10 during its functioning.

Based on these input data, the consumption forecasting module 26 generates a corresponding candidate consumption prediction that is used as an input to an optimization algorithm (e.g., based on a loss function), together with the energy consumption data that are indicative of energy consumptions effectively measured for several cases such as the one currently considered. In other words, the determined candidate consumption prediction and the energy consumption, comprised in the energy consumption data and corresponding to the same initial conditions as the presently considered candidate consumption prediction, are compared between them and their relative error is used to refine the weights of the consumption forecasting module 26 in a per se known way, thus leading to the minimization of this error throughout the training iterations and in the end to the completion of the training of the consumption forecasting module 26.

This training is generally performed outside the rail vehicle 10, e.g. in an external facility of the owner of the fleet to which the rail vehicle 10 belongs. Then, the optimized weights for the consumption forecasting module 26 are downloaded into the rail vehicle 10, thus allowing the rail vehicle 10 to operate in real-time applications.

In use, the optimization system 20 implements a method to minimize the energy consumption of the rail vehicle 10.

In details, the method comprises: receiving, by the optimization system 20, the abovementioned input data; based on the received input data, generating, by the optimization system 20, the plurality of candidate speed profiles; and selecting, by the optimization system 20 and among the candidate speed profiles, an optimized speed profile for driving the rail vehicle 10, the optimized speed profile minimizing the energy consumption of the rail vehicle 10.

Further details about the method are clear and evident in view of the previous description of the functioning of the optimization system, for example as previously described with reference to Figure 3.

From what has been described and illustrated previously, the advantages of the present invention are evident.

The proposed solution involves the use of the optimization system 20 that is able to provide real-time driving advice by calculating energy-efficient speed profiles, and to recommend optimal component configurations based on the analysis of the component condition data D3.

In details, several data sources are analysed to achieve this goal, such as on-board sensor data, kinematics values, energy metering data, component condition data, environmental data and route information.

The optimization system 20 contributes to environmental sustainability by reducing the energy consumption and improving the energy efficiency, in line with the railway decarbonisation and net zero ambitions. In details, it significantly reduces the energy costs by optimising the energy consumption and simultaneously enhancing the life cycle of the components 14 through their efficient usage.

In particular, the consumption forecasting module 26 learns from historical data about energy consumption, component conditions and environmental conditions, physical models and track data to dynamically determine the optimal energy-efficient speed profiles.

It has been verified that the optimization system 20 allows to reduce energy consumption by 10% relative to the current usage.

Finally, it is clear that modifications and variations may be made to what has been described and illustrated herein, without thereby departing from the scope of the present invention, as defined in the annexed claims. For example, the different embodiments described can be combined with each other to provide further solutions.

Moreover, even though the candidate configuration parameter sets, the candidate component efficiency sets and the candidate consumption predictions have been previously described as being fixed in time (e.g., the values of a considered candidate configuration parameter set do not change in time, from one time instant to another one), it is clear that these data may vary in time (e.g., that the control parameters of the optimized configuration parameter set may vary in time).

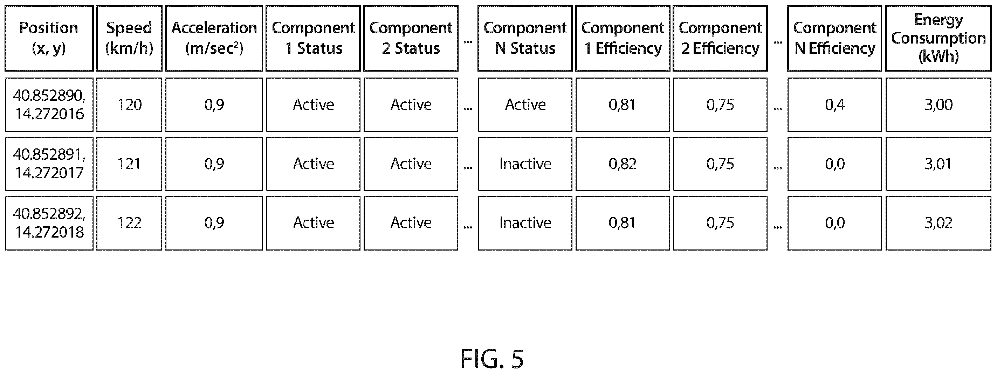

In details, Figure 5 schematically shows an example of the data generated by the optimization system 20 during its functioning, in the exemplary case in which these data vary in time.

In further details, Figure 5 shows data at three different time instants, for the same exemplary case. For each time instant, Figure 5 shows the respective values of the candidate speed profile (e.g., position, speed and acceleration), the respective values of the candidate configuration parameter set (here shown for three components 14 in terms of activity or inactivity), the respective values of the candidate component efficiency set (here shown for the three components 14 in terms of normalized values of efficiency) and the respective value of the cumulative consumption prediction (i.e., the cumulative sum of the candidate consumption predictions up to the considered time instant).

Furthermore, the optimization system 20 may also comprise a predictive maintenance module (not shown) configured to acquire the component condition data D3 and generate predictive maintenance information about the components 14. In details, the predictive maintenance information is indicative of the remaining lifetime of the components 14 and thus provides information about the timing for replacing or performing maintenance on the components 14, when required (e.g., when their lifetime is about to expire or when their functioning is compromised up to the point of requiring maintenance or replacement).

In particular, the predictive maintenance module can be based on physical models analogous to the ones of the efficiency module 24.

In fact, it has been verified that old or exhaust components 14 have worse working performances and thus increase the energy consumption of the rail vehicle 10. Therefore, by outputting information about the timely replacement of the old or exhaust components 14, it is possible to efficiently perform the replacement of these components 14, without excessive economical loss due to a systematic replacement, thereby reducing the energy consumption of the rail vehicle 10. In other words, the predictive maintenance information allows to achieve a trade-off between the costs involved in maintaining/replacing a component and the economic gain in terms of energy saving due to the components 14 being properly functioning (since a component that functions correctly consumes less than one that functions in a degraded way) .

Therefore, the optimization system 20 may also output the predictive maintenance information, for example to a maintenance technician through a visual interface of the rail vehicle 10.

## Claims

1. A rail vehicle (10) including:
a plurality of components (14) comprising at least one of the following: traction motors (14a) of the rail vehicle (10); a braking system (14b) of the rail vehicle (10); converters (14c) of the rail vehicle (10); Heating, Ventilation and Air Conditioning, HVAC, (14d) of the rail vehicle (10); and suspensions (14e) of the rail vehicle (10), and
an optimization system (20) coupled to the components (14) and configured to receive input data and, based on the received input data, generate a plurality of candidate speed profiles and select, among the candidate speed profiles, an optimized speed profile for driving the rail vehicle (10), the optimized speed profile minimizing the energy consumption of the rail vehicle (10),
the input data comprising:
- kinematics data (D1) determined in real-time and indicative of real-time kinematics information of the rail vehicle (10);
- track data (D2) indicative of a path to be travelled by the rail vehicle (10);
- constraint data (D4) indicative of constraints for the functioning of the rail vehicle (10), the constraint data (D4) comprising at least one among: a maximum speed of the rail vehicle (10) ; a maximum acceleration of the rail vehicle (10); and a timetable scheduling the travel of the rail vehicle (10); and
- component condition data (D3) comprising operating parameters determined in real-time and indicative of the real-time functioning of the components (14).

2. The rail vehicle (10) according to claim 1, wherein the optimization system (20) is further configured to, based on the received input data, generate a respective candidate configuration parameter set for each candidate speed profile and select, among the candidate configuration parameter sets, an optimized configuration parameter set indicative of control parameters for controlling the components (14), the optimized configuration parameter set contributing to the minimization of the energy consumption of the rail vehicle (10) .

3. The optimization system (20) according to claim 2, comprising:
- a generator module (22) configured to receive the kinematics data (D1), the track data (D2) and the constraint data (D4) and, based on the kinematics data (D1), the track data (D2) and the constraint data (D4), generate said plurality of candidate speed profiles and said respective plurality of candidate configuration parameter sets, each candidate configuration parameter set being generated based on a respective candidate speed profile of the candidate speed profiles;
- an efficiency module (24) configured to receive the candidate speed profiles, the candidate configuration parameter sets and the component condition data (D3) and, based on the candidate speed profiles, the candidate configuration parameter sets and the component condition data (D3), generate a respective candidate component efficiency set for each candidate configuration parameter set, each candidate component efficiency set being indicative of the predicted working efficiencies of the components (14) when the components (14) are controlled according to the respective candidate configuration parameter set and the rail vehicle (10) is controlled according to the respective candidate speed profile;
- a consumption forecasting module (26) configured to receive the candidate speed profiles, the candidate configuration parameter sets, the candidate component efficiency sets and the track data (D2) and, based on the candidate speed profiles, the candidate configuration parameter sets, the candidate component efficiency sets and the track data (D2), generate a respective candidate consumption prediction for each candidate speed profile, each candidate consumption prediction being indicative of a predicted energy consumption of the rail vehicle (10) or of each component (14); and
- a selector module (28) configured to receive the candidate speed profiles, the candidate configuration parameter sets, the candidate consumption predictions and the component condition data (D3) and, based on the candidate consumption predictions and the component condition data (D3), select as the optimized candidate speed profile and the optimized configuration parameter set respectively the candidate speed profile and the associated candidate configuration parameter set having the candidate consumption prediction that is indicative of the lowest predicted energy consumption of the rail vehicle (10).

4. The rail vehicle (10) according to claim 3, wherein the consumption forecasting module (26) is based on machine learning or artificial intelligence techniques and is trained based on a training dataset comprising energy consumption data indicative of historical data about the measured energy consumption of the rail vehicle (10).

5. The rail vehicle (10) according to claim 3 or 4, wherein the efficiency module (24) is based on physical models of the components (14).

6. The rail vehicle (10) according to anyone of claims 2-5, wherein the control parameters of the optimized configuration parameter set are variable in time.

7. The rail vehicle (10) according to anyone of the preceding claims, wherein the input data further comprise environmental data (D5) indicative of features of an environment in which the rail vehicle (10) is present, the environmental data (D5) comprising at least one among: an external temperature; an external humidity; and a wind speed.

8. The rail vehicle (10) according to anyone of the preceding claims, wherein, when the components (14) comprise the traction motors (14a), the component condition data (D3) comprise at least one of the following: a status of the traction motors (14a); a revolutions per minute number; a usage meter indicative of the past operating time of the traction motors (14a); an air intake temperature; an air intake pressure; and an intake air after-filter pressure,
wherein, when the components (14) comprise the braking system (14b), the component condition data (D3) comprise at least one of the following: a status of the braking system (14b); hours of life indicative of the past operating time of the braking system (14b); cycle counting indicative of the number of cycles performed within a specified period; and pressure levels,
wherein, when the components (14) comprise the converters (14c), the component condition data (D3) comprise at least one of the following: a switching frequency; a converter temperature; an input/output voltage; an input/output current; an error status; and an input/output power of the converters (14c),
wherein, when the components (14) comprise the HVAC (14d), the component condition data (D3) comprise at least one of the following: a status of the HVAC (14d); an operating mode of the HVAC (14d); a supply temperature indicative of the measured temperature of the supplied air; and a target temperature indicative of the target temperature of the air to be supplied, and
wherein, when the components (14) comprise the suspensions (14e), the component condition data (D3) comprise at least one of the following: a static bogie weight; and a body weight pressure.

9. The rail vehicle (10) according to anyone of the preceding claims, wherein the optimization system (20) further comprises a predictive maintenance module configured to acquire the component condition data (D3) and generate predictive maintenance information indicative of the timing for replacing or performing maintenance on each component (14) .

10. An optimization system (20) for a rail vehicle (10) including a plurality of components (14),
the optimization system (20) being couplable to the components (14) of the rail vehicle (10) and being configured to receive input data and, based on the received input data, generate a plurality of candidate speed profiles and select, among the candidate speed profiles, an optimized speed profile for driving the rail vehicle (10), the optimized speed profile minimizing the energy consumption of the rail vehicle (10),
the input data comprising:
- kinematics data (D1) determined in real-time and indicative of real-time kinematics information of the rail vehicle (10);
- track data (D2) indicative of a path to be travelled by the rail vehicle (10);
- constraint data (D4) indicative of constraints for the functioning of the rail vehicle (10), the constraint data (D4) comprising at least one among: a maximum speed of the rail vehicle (10); a maximum acceleration of the rail vehicle (10); and a timetable scheduling the travel of the rail vehicle (10); and
- component condition data (D3) comprising operating parameters determined in real-time and indicative of the real-time functioning of the components (14) of the rail vehicle (10).

11. A method for minimizing the energy consumption of a rail vehicle (10),
the rail vehicle (10) including:
a plurality of components (14) comprising at least one of the following: traction motors (14a) of the rail vehicle (10); a braking system (14b) of the rail vehicle (10); converters (14c) of the rail vehicle (10); Heating, Ventilation and Air Conditioning, HVAC, (14d) of the rail vehicle (10); and suspensions (14e) of the rail vehicle (10), and
an optimization system (20) coupled to the components (14),
the method comprising:
- receiving, by the optimization system (20), input data;
- based on the received input data, generating, by the optimization system (20), a plurality of candidate speed profiles; and
- selecting, by the optimization system (20) and among the candidate speed profiles, an optimized speed profile for driving the rail vehicle (10), the optimized speed profile minimizing the energy consumption of the rail vehicle (10), the input data comprising:
- kinematics data (D1) determined in real-time and indicative of real-time kinematics information of the rail vehicle (10);
- track data (D2) indicative of a path to be travelled by the rail vehicle (10);
- constraint data (D4) indicative of constraints for the functioning of the rail vehicle (10), the constraint data (D4) comprising at least one among: a maximum speed of the rail vehicle (10); a maximum acceleration of the rail vehicle (10); and a timetable scheduling the travel of the rail vehicle (10); and
- component condition data (D3) comprising operating parameters determined in real-time and indicative of the real-time functioning of the components (14).

12. The method according to claim 11, further comprising:
- generating, by the optimization system (20) and based on the received input data, a respective candidate configuration parameter set for each candidate speed profile; and
- selecting, by the optimization system (20) and among the candidate configuration parameter sets, an optimized configuration parameter set indicative of control parameters for controlling the components (14), the optimized configuration parameter set contributing to the minimization of the energy consumption of the rail vehicle (10),
wherein the steps of generating the candidate speed profiles and the candidate configuration parameter sets comprise generating, by a generator module (22) of the optimization system (10), said plurality of candidate speed profiles and said respective plurality of candidate configuration parameter sets based on the kinematics data (D1), the track data (D2) and the constraint data (D4), each candidate configuration parameter set being generated based on a respective candidate speed profile of the candidate speed profiles, and
wherein the steps of selecting the optimized speed profile and the optimized configuration parameter set comprise:
- based on the candidate speed profiles, the candidate configuration parameter sets and the component condition data (D3), generating, by an efficiency module (24) of the optimization system (20), a respective candidate component efficiency set for each candidate configuration parameter set, each candidate component efficiency set being indicative of the predicted working efficiencies of the components (14) when the components (14) are controlled according to the respective candidate configuration parameter set and the rail vehicle (10) is controlled according to the respective candidate speed profile;
- based on the candidate speed profiles, the candidate configuration parameter sets, the candidate component efficiency sets and the track data (D2), generating, by a consumption forecasting module (26) of the optimization system (20), a respective candidate consumption prediction for each candidate speed profile, each candidate consumption prediction being indicative of a predicted energy consumption of the rail vehicle (10) or of each component (14); and
- based on the candidate consumption predictions and the component condition data (D3), selecting, by a selector module (28) of the optimization system (20), as the optimized candidate speed profile and the optimized configuration parameter set respectively the candidate speed profile and the associated candidate configuration parameter set having the candidate consumption prediction that is indicative of the lowest predicted energy consumption of the rail vehicle (10) .
